# EUROPÄISCHE PATENTSCHRIFT

(11) **EP 4 291 379 B1**
(45) Veröffentlichungstag und Bekanntmachung des Hinweises auf die Patenterteilung: **14.08.2024**
(21) Anmeldenummer: 22722687.5
(22) Anmeldetag: 29.04.2022
(51) Int. Cl.: B29B 17/02

(54) **KUNSTSTOFFRECYCLINGVERFAHREN ZUR AUFBEREITUNG VON KUNSTSTOFFABFÄLLEN**
PLASTIC RECYCLING PROCESS FOR THE TREATMENT OF PLASTIC WASTE
PROCÉDÉ DE RECYCLAGE DES DÉCHETS PLASTIQUES POUR LE TRAITEMENT DES DÉCHETS PLASTIQUES

(43) Veröffentlichungstag der Anmeldung: 20.12.2023
(60) Teilanmeldung: 24156046.5
(73) Patentinhaber: GRANNEX GmbH & Co. KG, 49090 Osnabrück (DE)
(72) Erfinder: STOLZENBERG, Andreas, 28790 Schwanewede (DE); BÖRGER, Markus, 49086 Osnabrück (DE)
(74) Vertreter: Angerhausen, Christoph
(86) Internationale Anmeldenummer: PCT/DE2022/100325
(87) Internationale Veröffentlichungsnummer: WO 2023/208260

(56) Entgegenhaltungen:
- EP-A2- 0 557 816
- WO-A1-2009/061556
- US-A- 5 257 740
- US-A- 5 351 895
- US-A1- 2008 257 794
- US-B2- 9 469 049
- ANONYMOUS: "Abwasser-Aufbereitung im Kunststoff-Recycling - Krones", 31 May 2021 (2021-05-31), pages 1 - 5, XP055983032, Retrieved from the Internet <URL:https://www.krones.com/de/unternehmen/presse/abwasser-aufbereitung-im-kunststoff-recycling.php> [retrieved on 20221118]

## Beschreibung

Die Erfindung geht aus von einem Kunststoffrecyclingverfahren zur Aufbereitung von Kunststoffabfällen, aufweisend die Schritte: Bereitstellen eines Kunststoffabfallgemischstroms, welcher zum einen einen variablen Anteil 2D-Material und einen variablen Anteil 3D-Material und zum anderen eine inhomogene Dichteverteilung aufweist, wobei die Anteile über die Zeit variieren; Gemeinsames Waschen beider Anteile des Kunststoffabfallgemischstroms; Gemeinsames Zerkleinern beider Anteile des Kunststoffabfallgemischstroms unter Zuführung eines Reinigungsfluids; Dichtebasiertes Separieren des Kunststoffabfallgemischstroms in zumindest zwei Fraktionen, wobei die Separation in Abhängigkeit von einem vorbestimmbaren Dichtetrennschnitt erfolgt; Trennen des Anteils von 2D-Material und des Anteils von 3D-Material voneinander. Ein derartiges Verfahren ist bekannt aus der Druckschrift EP 0 557 816 A2. Weitere Verfahren sind außerdem bekannt aus den Druckschriften US 9 469 049 B2, US 5 257 740 A, WO 2009/061556 A1, US 2008/257794 A1 oder US 5 351 895 A.

Steigende Kunststoffabfallmengen stellen unsere Gesellschaft in den kommenden Jahren vor gewaltige Herausforderungen. Im Jahr 2019 fielen rund 5,35 Mio. t Post-Consumer-Kunststoffabfälle in Deutschland an. Hiervon wurden lediglich 1,33 Mio. t einer stofflichen Verwertung in Aufbereitungsanlagen innerhalb Deutschlands zugeführt. Hieraus wurden wiederum letztlich lediglich 1,03 Mio. t Output in einer Qualität erzeugt, die sich für einen Wiedereinsatz in der kunststoffverarbeitenden Industrie eignet. Dies entspricht einer Quote von etwas über 19%. Die Wahrheit zur Leistungsfähigkeit Deutschlands beim Kunststoffrecycling und Rezyklateinsatz ist entsprechend ernüchternd.

Stand heute verfügt Deutschland nicht über die notwendige Recyclinginfrastruktur um die hier anfallenden Kunststoffabfallmengen wirtschaftlich und technisch zu qualitativ hochwertigen Rezyklaten aufzubereiten. Viele Aufbereitungsanlagen entsprechen heute nicht dem Stand der Technik, sind veraltet und stehen wirtschaftlich auf sehr schwachem Fundament.

Steigende Kunststoffabfallmengen, verschärfte nationale und internationale Gesetzgebungen zu Genehmigungsverfahren und zur Steigerung von Verwertungsquoten und dem Einsatz von Rezyklaten sowie Abfallimport- & - Exporteinschränkungen stellen die EU-Mitgliedstaaten und besonders Kunststoffrecyclingunternehmen in den kommenden Jahren vor gewaltige Herausforderungen. Investitionen in Aufbereitungskapazitäten und besonders die Entwicklung neuer Aufbereitungsverfahren zur Lösung der beschriebenen Herausforderungen und Probleme werden dringend benötigt.

Eine der größten Herausforderungen für Kunststoffrecycler stellen stark verunreinigte Kunststoffabfallgemische dar. Mit bestehenden Recyclingprozessen & Anlagen sind diese Fraktionen derzeit nur sehr eingeschränkt werkstofflich aufzubereiten. Ein Großteil dieser Abfälle findet derzeit daher den Weg in eine thermische Verwertung. Zudem ermöglicht ein Großteil der hergestellten Rezyklate auf Grund qualitativer Defizite keine stabilen Kunststoffverarbeitungsprozesse und ersetzt daher nur selten nachhaltig Neuware in technisch anspruchsvollen Kunststoffprodukten.

Die heutige Situation verlangt nach neuen Ansätzen zur Aufbereitung und Schaffung von zusätzlichen Kapazitäten um die heute bereits geltenden Vorgaben aus u.a. VerpackG & KrWG zu erreichen, werkstoffliche Quoten nachhaltig zu erhöhen und um zukünftig Kunststoffrezyklate in ausreichender Menge und besonders von hoher, gleichbleibender Qualität der kunststoffverarbeitenden Industrie als Substitut für Primärkunststoffe bereitzustellen.

Die Entwicklung wirtschaftlich tragfähiger Konzepte zur werkstofflichen Aufbereitung für stark verunreinigte und gemischte Kunststoffabfallmengen, die bisher überwiegend thermisch verwertet wurden, ist kritisch. Neue und moderne Aufbereitungstechnik birgt großes Potenzial, Verwertungsquoten zu erfüllen sowie u.a. Abgaben auf bisher nicht in Deutschland recycelte Kunststoffabfallgemische zu vermeiden und eine weitere volkswirtschaftliche und ökologische Belastung durch nicht werkstofflich verwertete Kunststoffabfallmengen zu reduzieren.

Häufig werden Kunststoffe gemischt gesammelt jedoch erst nach dem Durchlaufen von aufwendigen trockenmechanischen Trennschritten wie beispielsweise Ballistik-Separatoren oder NIR-Sortern der Wiederaufbereitung zugeführt. Weil Folien, Beutel und Schalen in diesen bestehenden Verfahren und Anlagen jedoch nur schlecht gereinigt und von anderen Kunststoffsorten getrennt werden können, werden diese zu großen Teilen nicht der Wiederaufbereitung zugeführt, sondern gehen für das Recycling verloren. Diese nicht stofflich verwerteten Sortierreste werden daher energetisch verwertet und die enthaltene thermische Energie dazu verwendet, Strom und Fernwärme bereitzustellen.

Aus der DE 10 2013 213 478 A1 ist ein Verfahren zur Trennung und Rückgewinnung von Kunststoffen bekannt. Bei diesem erfolgt zu Beginn des Verfahrens eine Abtrennung von gewünschten Kunststoffarten aus einem anfallenden Kunststoffgemisch, eine anschließende Reinigung und Trocknung, eine Größenseparation, eine Farbsortierung, eine Trennung der gewünschten Kunststoffarten nach Sorte, eine Farbsortierung der Kunststoffchargen sowie eine Granulierung und Herstellung von Regranulaten. Das offenbarte Verfahren weist den Nachteil auf, dass bereits zu Beginn eine Vorabtrennung von bestimmten Kunststoffarten erfolgt, und dadurch nur eine geringe Recyclingquote erzielbar ist, da die abgetrennten Kunststoffe zum überwiegenden Teil keinem Recycling, sondern einer thermischen Verwertung zugeführt werden.

Es ist daher die Aufgabe der vorliegenden Erfindung, ein Kunststoffrecyclingverfahren zur Aufbereitung von Kunststoffabfällen derart zu verbessern, dass mit diesem eine höhere Wertstoffausbeute und eine deutlich erhöhte Sortenreinheit bei den aus Kunststoffabfallgemischen erzeugten Rezyklaten erreicht werden kann. Ferner ist es die Aufgabe der Erfindung, unterschiedlichste vom Markt zur Verfügung gestellte Stoffströme wirtschaftlich aufzubereiten, die Recyclingquote und Bereitstellung hochwertiger Rezyklate, insb. aus bisher schwer recyclebaren Stoffströmen zu erhöhen, sowie dezentral und regional die Bedarfe nach Aufbereitungskapazitäten zu decken.

Demgemäß ist vorgesehen, dass das Kunststoffrecyclingverfahren ferner die Schritte aufweist: Erfassen des Anteils von 2D-Material und/oder des Anteils von 3D-Material im Kunststoffabfallgemischstrom und Regulieren eines Zuführparameters des Kunststoffabfallgemischstroms in Abhängigkeit vom erfassten Anteil von 2D-und/oder 3D-Material. Das Bereitstellen eines Kunststoffabfallgemischstroms mit variablen Anteilen 2D- und 3D-Materials kann implizieren, dass der zugeführte Kunststoffabfallgemischstrom gegenüber herkömmlichen Verfahren deutlich heterogener ist und vor allem auch über die Zeit betrachtet großen Schwankungen hinsichtlich der einzelnen Anteile unterliegen kann. Das Kunststoffabfallgemisch kann als Ballen bereitgestellt werden. Die gepressten Kunststoffballen können mittels Hubstapler auf ein Beschickungsband gestellt werden, die Bindedrähte entfernt und in den Trichter eines Brechers oder Schredders befördert werden, wobei die Drähte wahlweise auch am Ballen belassen werden können. Es kann vorgesehen sein, dass das Waschen des Kunststoffabfallgemischstroms ausschließlich mit Wasser erfolgt. Gegenüber herkömmlichen Verfahren kann das Waschen des Kunststoffabfallgemischstroms als Ganzes erfolgen, so dass das 2D-Material bzw. die Folien und das 3D-Material bzw. Hartkunststoffe gemeinsam vorgewaschen werden. Demgegenüber ist aus herkömmlichen Verfahren bekannt, dass diese beiden Fraktionen getrennt gewaschen werden.

Das erfindungsgemäße Verfahren weist damit den Vorteil auf, dass es einen Kunststoffabfallgemischstrom mit schwankenden 2D/3D-Anteilen im Input verarbeiten kann. Die gemeinsame Verarbeitung von 2D- und 3D-Materialien führt dabei gegenüber den aus dem Stand der Technik bekannten Verfahren zu einer deutlich höheren Ausbeute aller Wertstoffkomponenten für eine werkstoffliche Verwertung. Darüber hinaus können im selben Verfahren bzw. in einer einzigen, das Verfahren ausführenden Anlage sowohl HDPE (High Density Polyethylen)-Mahlgut, PP (Polypropylen)-Mahlgut als auch ein PO (Polyolefin)-Folienmahlgut gewonnen werden, wobei bei einer mehrstufigen Implementierung des Verfahrens ferner unterschiedliche Polymer- oder Thermoplastsorten separiert voneinander gewonnen werden können.

In der Regel erfolgt die 3D/2D Trennung in LVP-Sortieranlagen vor der Zerkleinerung. Die vorliegende Erfindung weist demgegenüber den Vorteil auf, dass durch Verschiebung dieser Verfahrensstufe hinter den Aufschluss-, Anreicherungs- und Waschprozessschritt ausschließlich Folien/2D von Hohlkörpermahlgut/3D zu trennen sind. Dabei stellt es für den Prozess kein Problem dar, wenn Schwankungen im Verhältnis 2D zu 3D im Kunststoffgemischstrom auftreten.

Es ist vorgesehen, dass ferner ein Erfassen des Anteils von 2D-Material und/oder des Anteils von 3D-Material im Kunststoffabfallgemischstrom und ein Regulieren eines Zuführparameters des Kunststoffabfallgemischstroms in Abhängigkeit vom erfassten Anteil von 2D-und/oder 3D-Material erfolgt. Das Erfassen des Anteils kann beispielsweise optisch und/oder per Gewichtsmessung erfolgen. Die regulierbaren Zuführparameter können beispielsweise den Massenstrom und/oder den Volumenstrom und/oder die Zuführgeschwindigkeit des Kunststoffabfallgemischstroms umfassen. Die Schwankungsbreite des 2D-Anteils bzw. des 3D-Anteils des Kunststoffabfallgemischstroms kann sich grundsätzlich zwischen o % und 100 % bewegen. Im normalen Betrieb kann der Bereich insbesondere in einem Bereich von 20 %- 80 % oder auch 30 % - 70 % liegen.

Ferner ist vorgesehen, dass das Trennen des Anteils von 2D-Material und des Anteils von 3D-Material voneinander nach dem Separieren des Kunststoffabfallgemischstroms in zwei Fraktionen erfolgt.

Außerdem kann das Separieren des Kunststoffabfallgemischstroms in zwei Fraktionen nach dem Waschen und/oder nach dem Zerkleinern des Kunststoffabfallgemischstroms erfolgen. Das Zerkleinern des Kunststoffabfallgemischstroms kann in einer Nassmühle erfolgen. Diese kann zur gleichzeitigen Verwendung als Wasch- und Schneidmühle insbesondere von verschmutztem Eingangsmaterial vorgesehen sein. Als Reinigungsfluid kann Wasser verwendet werden. Das Reinigungsfluid kann der Mahlkammer der Mühle während des Zerkleinerungsprozesses zugeführt werden. Die Bewegung, die darin besteht, das Material aneinander zu reiben, während dieses gleichzeitig zerkleinert wird, bewirkt einen hocheffizienten Waschvorgang. In der Mühle kann eine die Schwerkraft unterstützende Strömung erzeugt werden, beispielsweise durch eine Förderpumpe. Dadurch kann eine blockadefreie Förderung ohne Strömungsabriss erzielt werden.

Es ist denkbar, dass das Waschen des Kunststoffabfallgemischstroms vor dem Zerkleinern des Kunststoffabfallgemischstroms erfolgt. Dadurch, dass das Waschen vor dem Zerkleinern erfolgt und das Zerkleinern in einer Nassmühle außerdem einen zusätzlichen Reinigungsvorgang des Kunststoffabfallgemischs enthält, kann die Qualität und Ausbeute der sich anschließenden Verfahrensschritte zur sortenreinen Trennung der Kunststoffarten und zur Farbtrennung deutlich erhöht werden und zur Minimierung von Verlusten beitragen. Es kann außerdem vorgesehen sein, dass ein weiterer Waschvorgang des Kunststoffabfallgemischstroms nach dem Zerkleinern des Kunststoffabfallgemischstroms erfolgt.

Ferner kann vorgesehen sein, dass vor dem Trennen des Anteils von 2D-Material und des Anteils von 3D-Material voneinander eine Entwässerung des Kunststoffabfallgemischstroms erfolgt. Dabei kann die Entwässerung eine mechanische und/oder thermische Entwässerung umfassen.

Das dichtebasierte Separieren des Kunststoffabfallgemischstroms kann zur Anreicherung einer gewünschten Stofffraktion mehrmals wiederholt werden. Es kann daher vorgesehen sein, dass der Kunststoffgemischstrom mehrere Hydrozyklone hintereinander durchläuft. Die Konzentration des Mahlguts ist im Auslass für Partikel mit höherer spezifischer Dichte des Hydrozyklons größer als im Auslass für Partikel mit geringerer spezifischer Dichte. Daher kann die Dichte der zweiten Stufe des Hydrozyklons inkrementell kleiner oder größer als die Dichte der ersten Stufe eingestellt werden. Der Hydrozyklon weist ein oberes, zylindrisches Segment mit einem tangentialen Zulauf aufweisen, ferner ein unteres, konisches Segment mit einem Unterlauf bzw. einer Apexdüse. Ferner kann der Hydrozyklon einen Vortex-Finder bzw. eine Oberlaufdüse aufweisen, in Form eines Tauchrohres, welches axial, von oben in das Innere des Zyklons ragt und unterhalb des tangentialen Zulaufes endet. Durch den tangentialen Eintritt in das zylindrische Segment wird die Flüssigkeit auf eine Kreisbahn gezwungen und strömt in einem abwärts gerichteten Wirbel nach unten. Durch die Verjüngung im konischen Segment kommt es zu einer Verdrängung von Volumen nach innen und zu einem Aufstau im unteren Bereich des Konus, was zur Bildung eines inneren, aufwärtsgerichteten Wirbels führt, der durch den Vortex-Finder bzw. die Oberlauföffnung entweicht. Ziel ist die Abscheidung der spezifisch schwereren Fraktion (z. B. Feststoff) an der Wand des Zyklons und somit der Austrag durch den Unterlauf, während die spezifisch leichtere Fraktion durch den Oberlauf entweicht. Der Hydrozyklon kann eine vertikale Strömung aufweisen, die im äußeren Bereich nach unten (Primärwirbel) und im inneren Bereich nach oben (Sekundärwirbel) gerichtet ist.

Die sich in diesen Strömungen ansammelnden Partikel werden somit entweder der Ober- oder der Unterlauföffnung zugeführt.

Es kann vorgesehen sein, dass der Kunststoffabfallgemischstrom zum Separieren in zwei Fraktionen einem Fliehkraftabscheider, insbesondere einem Hydrozyklon, zugeführt wird. Hydrozyklone können zur Trennung von Kunststoffen nach ihrer Dichte eingesetzt werden.

Ferner kann vorgesehen sein, dass die vorbestimmbare Dichte zum Separieren des Kunststoffabfallgemischstroms zwischen 1 und 1,05 kg/dm3 einstellbar ist.

Es kann ferner vorgesehen sein, dass das Separieren in zwei Fraktionen das Anreichern einer Leichtfraktion in zumindest einem ersten Hydrozyklon und das Anreichern einer Schwerfraktion in zumindest einem zweiten Hydrozyklon umfasst. Die Hydrozyklone können dabei in Reihe verschaltet sein. Es kann beispielsweise vorgesehen sein, dass ein erster Hydrozyklon einen ersten Trennschnitt in eine Leicht- und eine Schwerfraktion vornimmt, und dass ein weiterer die Leichtfraktion aufnehmender und weiter anreichender Leichtfraktion-Hydrozyklon vorgesehen ist und/oder ein weiterer die Schwerfraktion aufnehmender und die Schwerfraktion weiter anreichender Schwerfraktion-Hydrozyklon vorgesehen ist. Der Schwerfraktion-Hydrozyklon kann ein Flachboden-Hydrozyklon sein.

Es kann insbesondere vorgesehen sein, dass der 3D-Anteil voluminöse Kunststoffabfälle wie Hohlkörper und der 2D-Anteil flächige Kunststoffabfälle wie Folien umfasst.

Es ist denkbar, dass das Waschen mittels Wasser erfolgt, und wobei als Reinigungsmedium beim Zerkleinern des Kunststoffabfallgemischstroms Wasser verwendet wird, wobei das Wasser jeweils frei von Reinigungsmitteln und/oder Flockungsmitteln ist.

Es kann vorgesehen sein, dass das Waschen und das weitere Waschen des Kunststoffabfallgemischstroms jeweils in einem Friktionswäscher erfolgt. Bedingt durch dessen geneigte Ausrichtung wird das Kunststoffabfallgemisch bzw. das Mahlgut im Friktionswäscher durch eine Schneckenwelle des Friktionsabscheiders von unten zu einem oben liegenden Auslauf transportiert, wobei während des Transports von unten nach oben der Waschvorgang erfolgt. Das Feingut kann dabei gemeinsam mit Wasser und beispielsweise auch aufgeweichtem Papier durch ein die Schneckenwelle umschließendes Feinsieb nach außen geschleudert werden und kann durch einen Auslaufstutzen ablaufen. Zusätzliches Wasser kann bei Bedarf direkt durch eine Einlauföffnung nachgefüllt werden. Es kann vorgesehen sein, dass konstant Frischwasser oder sauberes Kreislaufwasser eingedüst wird, um ein Verstopfen der Sieblöcher zu verhindern. Zusätzlich kann eine konstante mechanische Reinigung der Sieboberfläche erfolgen.

Es kann vorgesehen sein, dass das Trennen des Anteils von 2D-Material und des Anteils von 3D-Material mittels Windsichtung erfolgt. Dabei können einzelne Partikel anhand ihres Verhältnisses von Trägheits- und/oder Schwerkraft zum Strömungswiderstand in einem Luftstrom getrennt werden. Dabei folgen feinere, insbesondere flächige, Partikel der Strömung, grobe der Massenkraft. Im Sichter können Leichtfraktionen wie Folien bzw. 2D von anderen schweren Fraktionen wie Hartkunststoffe bzw. Hohlkörperkunststoffe bzw. 3D getrennt werden. Dabei kann vorgesehen sein, dass auch mehr als zwei Fraktionen voneinander getrennt werden. Der Windsichter kann als Zick-Zack-Sichter ausgeführt sein. Dabei wird der gewaschene und zerkleinerte, 2D- und 3D-Material aufweisende, Kunststoffstrom über eine luftdichte Zuführeinrichtung einem zick-zack-förmigen Sichterkanal zugeführt. In diesem wird nach einem Mehrfach-Querstrom-Sichtverfahren Leichtgut von Schwergut getrennt. Die für die Trennung erforderliche Luft durchströmt den Sichterkanal von unten nach oben. Die leichten Partikel werden vom Luftstrom mitgerissen. Die schweren Partikel fallen gegen den Luftstrom nach unten, welche am Sichterfuß ausgetragen werden.

Ferner kann vorgesehen sein, dass das Kunststoffrecyclingverfahren vor dem Waschen des Kunststoffabfallgemischstroms folgende Schritte aufweist: Vorzerkleinern des Kunststoffabfallgemischstroms; Abscheiden von Schwergut und Störstoffen aus dem vorzerkleinerten Kunststoffabfallgemischstrom. Alternativ kann das Waschen auch bereits vor dem Vorzerkleinern erfolgen.

Dabei kann das Vorzerkleinern, insbesondere Schreddern, des Kunststoffabfallgemischstroms im trockenen Zustand des Kunststoffabfallgemischstroms erfolgen. Es kann vorgesehen sein, dass der Schredder einen Magnetabscheider für eisenhaltige Materialien und/oder einen Nichteisenabscheider für sonstige Metalle aufweist und im Zuge des Schredderns bzw. des Vorzerkleinerns entsprechende Materialien bereits abgeschieden werden. Es kann vorgesehen sein, dass der Schredder eine Sicherheitskupplung aufweist, durch welche der Schredder sofort stoppbar ist, wenn sich größere Metallteile im Kunststoffabfallgemischstrom befinden.

Ferner ist denkbar, dass das Abscheiden des Schwerguts mittels einer Schwergutfalle erfolgt, wobei die Schwergutfalle eine Schwimm-Sinktrennung aufweist, über welche das Schwergut abgeschieden wird. In der Schwergutfalle können das Schwergut bzw. Störstoffe aufgrund ihrer höheren Dichte innerhalb der Schwergutfalle absinken und somit als Sinkgut vorliegen. Die eine geringere Dichte aufweisenden Kunststoffe können zusammen mit der Flüssigkeit als Suspension aus der Schwergutfalle abgeführt und der weiteren Aufbereitung zugeführt werden. Dabei kann es sich bei den in der Suspension enthaltenen Kunststoffen beispielsweise um Polyethylen (PE) und/oder Polypropylen (PP) und/oder Polyethylenterephthalat (PET) handeln.

Ferner kann vor dem Abscheiden des Schwerguts ein Abscheiden biogener Fraktionen erfolgen.

Außerdem kann vor dem Abscheiden des Schwerguts ein Abscheiden metallhaltiger Materialien erfolgen. Das Kunststoff-Mischmaterial kann durch einen Magneten und einen Nichteisenabscheider von Metallteilen befreit werden. Die Metalle können dann wieder der stofflichen Verwertung zugeführt werden.

Darüber hinaus kann das Vorzerkleinern des Kunststoffabfallgemischstroms vor dem Zerkleinern erfolgen, wobei das Zerkleinern feinere Schnipsel erzeugen kann als das Vorzerkleinern.

Das Verfahren kann ferner einen geschlossenen Prozesswasserkreislauf ohne kontinuierliche oder regelmäßige Frischwasserzuführung aufweisen. Dabei können in den Prozesswasserkreislauf das Waschen, das weitere Waschen und das Zerkleinern des Kunststoffabfallgemischstroms integriert sein.

Im Gegensatz zu bekannten Verfahren kann bei der vorliegenden Erfindung vorgesehen sein, dass eine NIR-Sortierung zur Kunststoffartentrennung und/oder eine VIS-Sortierung zur Farbtrennung am Schluss des Verfahrens erfolgt. Der Vorteil besteht darin, dass dadurch ausschließlich gewaschene Mahlgutgemische die NIR Trennstufen als Monochargen durchlaufen. Durch dieses Verfahren ist man in der Lage, höchst effizient Kunststoffe nach ihrer Sorte zu trennen. Die ansonsten stets bestehende Gefahr der Kreuzvermischung besteht dadurch nicht mehr. Die Kunststoffartentrennung kann eine Trennung zwischen Polypropylen und HD-Polyethylen umfassen. Beide Fraktionen können jeweils einer Farbsortierung unterzogen werden. Ferner können beide Fraktionen nach hell, dunkel und/oder bunt sortiert werden.

Weitere Einzelheiten der Erfindung werden anhand der nachstehenden Figuren erläutert. Dabei zeigt:
- Fig. 1: ein Ablaufdiagramm einer ersten Ausführungsform des erfindungsgemäßen Kunststoffrecyclingverfahrens;
- Fig. 2: ein Ablaufdiagramm einer zweiten Ausführungsform des erfindungsgemäßen Kunststoffrecyclingverfahrens;
- Fig. 3: eine Darstellung einer beispielhaften Verschaltung von zwei Hydrozyklonen unterschiedlicher Konfiguration.

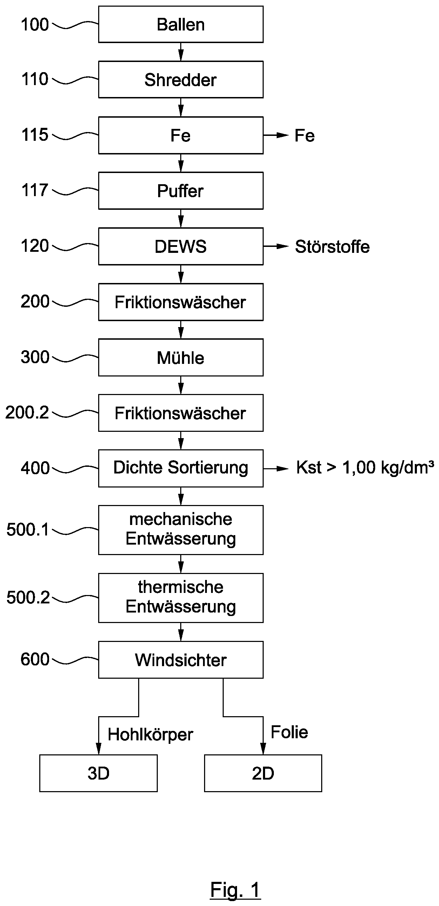

Beim in Fig. 1 gezeigten Kunststoffrecyclingverfahren zur Aufbereitung von Kunststoffabfällen wird zunächst ein Kunststoffabfallgemischstrom in Ballen bereitgestellt 100. Dieser weist zum einen einen variablen Anteil von 2D-Material und zum anderen einen variablen Anteil von 3D-Material auf. Darüber hinaus weist der Kunststoffabfallgemischstrom eine inhomogene Dichteverteilung auf. Das ballenförmige Kunststoffabfallgemisch wird einem Schredder zugeführt und darin vorzerkleinert 110. In diesem erfolgt neben der Vorzerkleinerung des Kunststoffs außerhalb ein Abscheiden 115 metallhaltiger Materialien aus dem Kunststoffabfallgemischstrom. Anschließend wird das vorzerkleinerte Material zwischengepuffert 117. Eine Vorwaschschnecke wird anschließend zum Waschen und Einweichen des Kunststoffabfallgemischstroms und zum Abscheiden 20 sinkender Störstoffe wie z.B. Steinen, Sand oder Glas genutzt. Dabei wird das Kunststoffabfallgemisch an einem unteren Ende der Vorwaschschnecke in einen Vorwaschtank eingegeben und durch Paddelwalzen unter Wasser gedrückt. Durch eine oder mehrere Förderschnecken wird das Kunststoffabfallgemisch anschließend zur Oberseite befördert. Während des Transports ist das Material stark in Bewegung, sodass Kontaminationen wie Steine, Sand, Glas und Metalle leicht absinken können. Zusätzlich werden die Anhaftungen am Kunststoff eingeweicht, sodass diese besser abgelöst werden können. Je nach Kontaminationsart können unterschiedliche Austragssysteme genutzt werden. Einfache, kleine Kontaminationen wie Steine oder Glass können über ein zeitgesteuertes Schiebersystem ausgeschieden werden. Bei größeren oder langen Kontaminationen wie z.B. Draht, oder aber größeren Kontaminationsmengen können Kratzkettenförderer oder Schnecken zum Kontaminationsaustrag genutzt werden. Anschließend wird das Kunststoffabfallgemisch zum Waschen 200 einem ersten Friktionswäscher zugeführt. Bedingt durch dessen geneigte Ausrichtung wird das Kunststoffabfallgemisch bzw. das Mahlgut im Friktionswäscher durch eine Schneckenwelle des Friktionsabscheiders von unten zu einem oben liegenden Auslauf transportiert, wobei während des Transports von unten nach oben der Waschvorgang erfolgt. Das Feingut kann dabei gemeinsam mit Wasser und beispielsweise auch aufgeweichtem Papier durch ein die Schneckenwelle umschließendes Feinsieb nach außen geschleudert werden und kann durch einen Auslaufstutzen ablaufen. Anschließend wird der Kunststoffabfallgemischstrom unter Zuführung von Wasser in einer Nassmühle auf eine Zielpartikelgröße des Mahlgutszerkleinert 300. In dieser wird der Kunststoffabfallgemischstrom unter Zuführung von Wasser gleichzeitig gewaschen und zerkleinert. Das Wasser wird der Mahlkammer der Mühle während des Zerkleinerungsprozesses zugeführt. Danach wird das Kunststoffabfallgemisch zum erneuten Waschen 200.2 einem zweiten Friktionswäscher zugeführt. Anschließend erfolgt ein dichtebasiertes Separieren 400 des Kunststoffabfallgemischstroms in zwei Fraktionen mittels eines Hydrozyklons. Dabei erfolgt die Separation in der gezeigten Ausführungsform in Abhängigkeit eines Dichtetrennschnitts von 1 kg/dm³. Dabei wird die Schwerfraktion mit einer Dichte von > 1 kg/dm₃ an der Unterseite des Hydrozyklons abgeführt und die Leichtfraktion mit einer Dichte von < 1 kg/dm₃ an der Oberseite des Hydrozyklons abgeführt. Die Schwerfraktion wird dabei aus dem Prozess ausgeschleust, während die Leichtfraktion anschließend zunächst mechanisch 500.1 und anschließend thermisch 500.2 entwässert wird. Danach wird die Leichtfraktion in einem Windsichter in einen Anteil von 2D-Material und einen Anteil von 3D-Material getrennt 600. Dabei wird das Mahlgut anhand seines Verhältnisses von Trägheits-und/oder Schwerkraft zum Strömungswiderstand in einem Gasstrom getrennt. Die feineren Mahlgutpartikel folgen dabei der Strömung, die gröberen der Massenkraft. Somit wird im Windsichter die Leichtfraktion umfassend Folien bzw. 2D von der Schwerfraktion umfassend Hartkunststoffe bzw. Hohlkörperkunststoffe bzw. 3D getrennt.

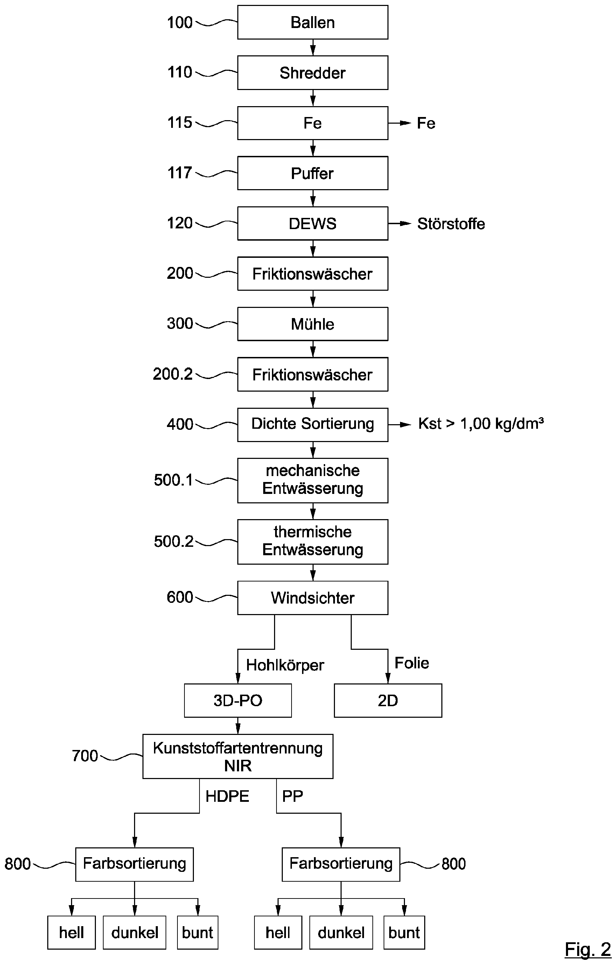

Die in der Fig. 2 gezeigte Ausführungsform des erfindungsgemäßen Verfahrens weist gegenüber dem in Fig. 1 gezeigten Verfahren zwei Unterschiede auf. Zum einen erfolgt die Separation in der Ausführungsform nach Fig. 2 in Abhängigkeit eines Dichtetrennschnitts von 1,05 kg/dm³. Dabei wird die Schwerfraktion mit einer Dichte von > 1,05 kg/dm³ an der Unterseite des Hydrozyklons abgeführt und die Leichtfraktion mit einer Dichte von < 1,05 kg/dm³ an der Oberseite des Hydrozyklons abgeführt. Zum anderen erfolgt nach der Trennung 600 im Windsichter bei der Fraktion der 3D-Hohlkörper-Polyolefine eine Kunststoffartentrennung 700 mittels Nahinfrarot (NIR) in die Kunststoffarten HDPE und PP. Beide Kunststoffartenströme werden anschließend gesondert einer Farbsortierung 800 unterzogen, bei welcher jeweils eine helle, eine dunkle und eine bunte Fraktion voneinander getrennt werden, beispielsweise mittels sichtbaren Lichts (VIS)-Spektroskopie.

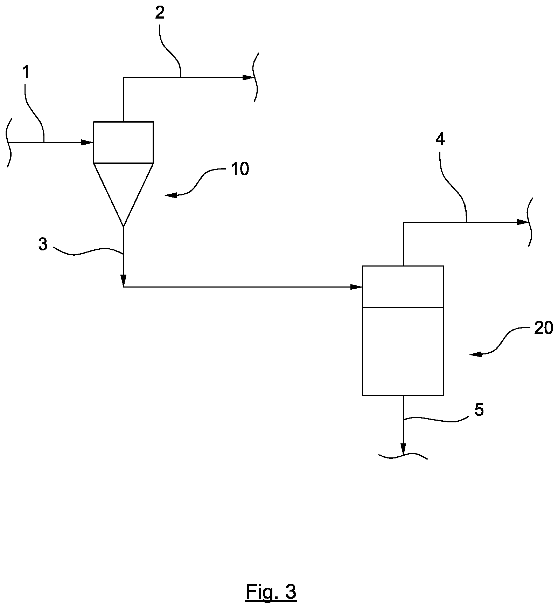

Fig. 3 zeigt ein Verschaltungsbeispiel von zwei Hydrozyklonen 10, 20 zur Gewinnung weiterer Polymere im Zuge des dichtebasierten Separierens 400 des Kunststoffabfallgemischstroms 1. Der Kunststoffabfallgemischstrom 1 wird einem ersten Hydrozyklon 10 zugeführt und weist dabei beispielsweise PE, PP, PS, PET, PP-T, ABS und sonstige Bestandteile auf. Der erste Hydrozyklon 10 ist im dargestellten Beispiel ein konischer Hydrozyklon und teilt den Kunststoffabfallgemischstrom 1 in eine erste Leichtfraktion 2 und eine erste Schwerfraktion 3 auf. Der erste Hydrozyklon 10 trennt die erste Leichtfraktion 2 und die erste Schwerfraktion 3 bei einen Dichteschnitt von 1 kg/dm³. Die erste Leichtfraktion 2 beinhaltet somit beispielsweise PE und PP. Die erste Schwerfraktion 3 umfasst entsprechend den Rest des Kunststoffabfallgemischstroms 1, nämlich PS, PET, PP-T, ABS sowie die sonstigen Bestandteile. Die erste Leichtfraktion 2 wird anschließend den weiteren Schritten des Prozesses zugeführt, die erste Schwerfraktion 3 demgegenüber einem zweiten Hydrozyklon 20, welcher als Flachbodenhydrozyklon ausgebildet ist. In diesem erfolgt ein Dichtetrennschnitt bei bis zu 1,05 kg/dm³, so dass im zweiten Hydrozyklon 20 eine zweite Leichtfraktion 4 von einer zweiten Schwerfraktion 5 getrennt wird. Die zweite Leichtfraktion 4 umfasst dabei PS, PP-T und ABS, die zweite Schwerfraktion 5 PET sowie die sonstigen Bestandteile. Sämtliche Fraktionen 2-5 werden nach Durchlaufen der Hydrozyklone separat voneinander den weiteren Prozessschritten zugeführt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Kunststoffabfallgemischstrom
- 2: erste Leichtfraktion
- 3: erste Schwerfraktion
- 4: zweite Leichtfraktion
- 5: zweite Schwerfraktion
- 10: erster Hydrozyklon
- 20: zweiter Hydrozyklon
- 110: Vorzerkleinern
- 115: Abscheiden metallhaltiger Materialien
- 117: Puffern
- 120: Abscheiden von Schwergut und Störstoffen
- 100: Bereitstellen eines Kunststoffabfallgemischstroms
- 200: Waschen des Kunststoffabfallgemischstroms
- 200.2: weiterer Waschvorgang
- 300: Zerkleinern des Kunststoffabfallgemischstroms
- 400: Dichtebasiertes Separieren des Kunststoffabfallgemischstroms in zumindest zwei Fraktionen
- 500.1: mechanische Entwässerung
- 500.2: thermische Entwässerung
- 600: Trennen des Anteils von 2D-Material und des Anteils von 3D-Material
- 700: NIR-Kunststoffartentrennung
- 800: Farbsortierung

## Patentansprüche

1. Kunststoffrecyclingverfahren zur Aufbereitung von Kunststoffabfällen, aufweisend die Schritte:
Bereitstellen (100) eines Kunststoffabfallgemischstroms, welcher zum einen einen variablen Anteil 2D-Material und einen variablen Anteil 3D-Material und zum anderen eine inhomogene Dichteverteilung aufweist, wobei die Anteile über die Zeit variieren;
Gemeinsames Waschen (200) beider Anteile des Kunststoffabfallgemischstroms;
Gemeinsames Zerkleinern (300) beider Anteile des Kunststoffabfallgemischstroms unter Zuführung eines Reinigungsfluids;
Dichtebasiertes Separieren (400) des Kunststoffabfallgemischstroms in zumindest zwei Fraktionen, wobei die Separation in Abhängigkeit von einem vorbestimmbaren Dichtetrennschnitt erfolgt;
bei zumindest einer der separierten Fraktionen: Trennen (500) des Anteils von 2D-Material und des Anteils von 3D-Material voneinander;
Erfassen des Anteils von 2D-Material und/oder des Anteils von 3D-Material im Kunststoffabfallgemischstrom;
Regulieren eines Zuführparameters des Kunststoffabfallgemischstroms in Abhängigkeit vom erfassten Anteil von 2D-und/oder 3D-Material.

2. Kunststoffrecyclingverfahren nach Anspruch 1, wobei das Separieren (400) des Kunststoffabfallgemischstroms in zwei Fraktionen nach dem Zerkleinern (300) des Kunststoffabfallgemischstroms erfolgt.

3. Kunststoffrecyclingverfahren nach einem der vorangegangenen Ansprüche, wobei das Waschen (200) des Kunststoffabfallgemischstroms vor dem Zerkleinern (300) des Kunststoffabfallgemischstroms erfolgt.

4. Kunststoffrecyclingverfahren nach einem der vorangegangenen Ansprüche, wobei ein weiterer gemeinsamer Waschvorgang (200.2) beider Anteile des Kunststoffabfallgemischstroms nach dem Zerkleinern (300) des Kunststoffabfallgemischstroms erfolgt.

5. Kunststoffrecyclingverfahren nach einem der vorangegangenen Ansprüche, wobei vor dem Trennen (500) des Anteils von 2D-Material und des Anteils von 3D-Material voneinander eine Entwässerung (600) des Kunststoffabfallgemischstroms erfolgt.

6. Kunststoffrecyclingverfahren nach Anspruch 5, wobei die Entwässerung eine mechanische (500.1) und/oder thermische Entwässerung (500.2) umfasst.

7. Kunststoffrecyclingverfahren nach einem der vorangegangenen Ansprüche, wobei das dichtebasierte Separieren (400) des Kunststoffabfallgemischstroms zur Anreicherung einer gewünschten Stofffraktion mehrmals wiederholt wird.

8. Kunststoffrecyclingverfahren nach einem der vorangegangenen Ansprüche, wobei der Kunststoffabfallgemischstrom zum Separieren (400) in zwei Fraktionen einem Fliehkraftabscheider, insbesondere einem Hydrozyklon, zugeführt wird.

9. Kunststoffrecyclingverfahren nach einem der vorangegangenen Ansprüche, wobei die vorbestimmbare Dichte zum Separieren (400) des Kunststoffabfallgemischstrom zwischen 1 und 1,05 kg/dm³ einstellbar ist.

10. Kunststoffrecyclingverfahren nach einem der Ansprüche 8 oder 9, wobei das Separieren (400) in zwei Fraktionen das Anreichern einer Leichtfraktion in zumindest einem ersten Hydrozyklon und das Anreichern einer Schwerfraktion in zumindest einem zweiten Hydrozyklon umfasst.

11. Kunststoffrecyclingverfahren nach einem der vorangegangenen Ansprüche, wobei der 3D-Anteil Hohlkörper-Kunststoffabfälle und der 2D-Anteil Folien-Kunststoffabfälle umfasst.

12. Kunststoffrecyclingverfahren nach einem der vorangegangenen Ansprüche, wobei das Trennen (600) des Anteils von 2D-Material und des Anteils von 3D-Material mittels Windsichtung erfolgt.

13. Kunststoffrecyclingverfahren nach einem der vorangegangenen Ansprüche, bei welchem das Erfassen des Anteils von 2D-und/oder 3D-Material optisch und/oder per Gewichtsmessung erfolgt.

14. Kunststoffrecyclingverfahren nach einem der vorangegangenen Ansprüche, bei welchem das Regulieren des Zuführparameters das Regulieren des Massenstroms und/oder den Volumenstroms und/oder die Zuführgeschwindigkeit des Kunststoffabfallgemischstroms umfasst.

15. Kunststoffrecyclingverfahren nach einem der vorangegangenen Ansprüche, bei welchem die Schwankungsbreite des 2D-Anteils bzw. des 3D-Anteils des Kunststoffabfallgemischstroms in einem Bereich von 20 %- 80 %, insbesondere 30 % - 70 % liegt.

## Claims

1. A plastic recycling method for processing plastic waste, comprising the steps of:
providing (100) a plastic waste mixture stream which on the one hand has a variable proportion of 2D material and a variable proportion of 3D material and on the other hand has an inhomogeneous density distribution, wherein the proportions vary over time;
jointly washing (200) both proportions of the plastic waste mixture stream;
jointly comminuting (300) both proportions of the plastic waste mixture stream while supplying a cleaning fluid;
density-based separation (400) of the plastic waste mixture stream into at least two fractions, wherein the separation takes place as a function of a predeterminable density separation cut;
in the case of at least one of the separated fractions: separating (500) the proportion of 2D material and the proportion of 3D material from one another;
detecting the proportion of 2D material and/or the proportion of 3D material in the plastic waste mixture stream;
regulating a supply parameter of the plastic waste mixture stream as a function of the detected proportion of 2D and/or 3D material.

2. The plastic recycling method according to claim 1, wherein the separation (400) of the plastic waste mixture stream into two fractions takes place after the comminution (300) of the plastic waste mixture stream.

3. The plastic recycling method according to one of the preceding claims, wherein the washing (200) of the plastic waste mixture stream takes place before the comminution (300) of the plastic waste mixture stream.

4. The plastic recycling method according to one of the preceding claims, wherein a further joint washing process (200.2) of both proportions of the plastic waste mixture stream takes place after the comminution (300) of the plastic waste mixture stream.

5. The plastic recycling method according to one of the preceding claims, wherein a dewatering (600) of the plastic waste mixture stream takes place before the separation (500) of the proportion of 2D material and the proportion of 3D material from one another.

6. The plastic recycling method according to claim 5, wherein the dewatering comprises a mechanical (500.1) and/or thermal dewatering (500.2).

7. The plastic recycling method according to one of the preceding claims, wherein the density-based separation (400) of the plastic waste mixture stream is repeated several times in order to enrich a desired material fraction.

8. The plastic recycling method according to one of the preceding claims, wherein the plastic waste mixture stream is fed to a centrifugal force separator, in particular a hydrocyclone, for the separation (400) into two fractions.

9. The plastic recycling method according to one of the preceding claims, wherein the predeterminable density for the separation (400) of the plastic waste mixture stream can be set between 1 and 1.05 kg/dm³.

10. The plastic recycling method according to one of claims 8 or 9, wherein the separation (400) into two fractions comprises the enrichment of a light fraction in at least one first hydrocyclone and the enrichment of a heavy fraction in at least one second hydrocyclone.

11. The plastic recycling method according to one of the preceding claims, wherein the 3D proportion comprises hollow body plastic wastes and the 2D proportion comprises film plastic wastes.

12. The plastic recycling method according to one of the preceding claims, wherein the separation (600) of the proportion of 2D material and the proportion of 3D material takes place by means of air separation.

13. The plastic recycling method according to one of the preceding claims, in which the detection of the proportion of 2D and/or 3D material takes place optically and/or by weight measurement.

14. The plastic recycling method according to one of the preceding claims, in which the regulation of the supply parameter comprises the regulation of the mass flow and/or the volume flow and/or the supply speed of the plastic waste mixture stream.

15. The plastic recycling method according to one of the preceding claims, in which the variation width of the 2D proportion or of the 3D proportion of the plastic waste mixture stream lies in a range of 20%-80%, in particular 30%-70%.

## Revendications

1. Procédé de recyclage de matières plastiques pour le traitement de déchets de matières plastiques, comprenant les étapes suivantes :
mise à disposition (100) d'un flux composite de déchets de matières plastiques qui d'une part comprend une part variable de matériau 2D et une part variable de matériau 3D et d'autre part présente une répartition de densité inhomogène, dans lequel les parts varient dans le temps ;
lavage en commun (200) des deux parts du flux composite de déchets de matières plastiques ;
broyage en commun (300) des deux parts du flux composite de déchets de matières plastiques en ajoutant un fluide de nettoyage ;
séparation par densité (400) du flux composite de déchets de matières plastiques en au moins deux fractions, dans lequel la séparation a lieu en fonction d'un seuil de séparation de densité prédéterminé ;
pour au moins une des fractions séparées : séparation (500) de la part de matériau 2D et de la part de matériau 3D entre elles ;
mesure de la part de matériau 2D et/ou de la part de matériau 3D dans le flux composite de déchets de matières plastiques ;
régulation d'un paramètre d'introduction du flux composite de déchets de matières plastiques en fonction de la part mesurée de matériau 2D et/ou de matériau 3D.

2. Procédé de recyclage de matières plastiques selon la revendication 1, dans lequel la séparation (400) du flux composite de déchets de matières plastiques en deux fractions a lieu après le broyage (300) du flux composite de déchets de matières plastiques.

3. Procédé de recyclage de matières plastiques selon l'une des revendications précédentes, dans lequel le lavage (200) du flux composite de déchets de matières plastiques a lieu avant le broyage (300) du flux composite de déchets de matières plastiques.

4. Procédé de recyclage de matières plastiques selon l'une des revendications précédentes, dans lequel un autre processus de lavage en commun (200.2) des deux parts du flux composite de déchets de matières plastiques a lieu après le broyage (300) du flux composite de déchets de matières plastiques.

5. Procédé de recyclage de matières plastiques selon l'une des revendications précédentes, dans lequel, avant la séparation (500) de la part de matériau 2D et de la part de matériau 3D entre elles, a lieu une déshydratation (600) du flux composite de déchets de matières plastiques.

6. Procédé de recyclage de matières plastiques selon la revendication 5, dans lequel la déshydratation comprend une déshydratation mécanique (500.1) et/ou thermique (500.2).

7. Procédé de recyclage de matières plastiques selon l'une des revendications précédentes, dans lequel la séparation basée sur la densité (400) du flux composite de déchets de matières plastiques est répétée plusieurs fois afin d'enrichir une fraction de matériau souhaitée.

8. Procédé de recyclage de matières plastiques selon l'une des revendications précédentes, dans lequel le flux composite de déchets de matières plastiques est introduit, pour la séparation (400) en deux fractions, dans un séparateur centrifuge, plus particulièrement un hydrocyclone.

9. Procédé de recyclage de matières plastiques selon l'une des revendications précédentes, dans lequel la densité prédéterminée pour la séparation (400) du flux composite de déchets de matières plastiques peut être réglée entre 1 et 1,05 kg/dm³.

10. Procédé de recyclage de matières plastiques selon l'une des revendications 8 ou 9, dans lequel la séparation (400) en deux fractions comprend l'enrichissement d'une fraction légère dans au moins un premier hydrocyclone et l'enrichissement d'une fraction lourde dans au moins un deuxième hydrocyclone.

11. Procédé de recyclage de matières plastiques selon l'une des revendications précédentes, dans lequel la part de matériau 3D comprend des déchets de matières plastiques sous forme de corps creux et la part de matériau 2D comprend des déchets de matières plastiques sous forme de films.

12. Procédé de recyclage de matières plastiques selon l'une des revendications précédentes, dans lequel la séparation (600) de la part de matériau 2D et de la part de matériau 3D a lieu par ventilation.

13. Procédé de recyclage de matières plastiques selon l'une des revendications précédentes, dans lequel la mesure de la part de matériau 2D et/ou 3D a lieu de manière optique et/ou par mesure de poids.

14. Procédé de recyclage de matières plastiques selon l'une des revendications précédentes, dans lequel la régulation du paramètre d'introduction comprend la régulation du débit massique et/ou du débit volumique et/ou de la vitesse d'introduction du flux composite de déchets de matières plastiques.

15. Procédé de recyclage de matières plastiques selon l'une des revendications précédentes, dans lequel la marge de fluctuation de la part de matériau 2D ou de la part de matériau 3D du flux composite de déchets de matières plastiques se trouve dans un intervalle de 20 % à 80 %, plus particulièrement de 30 % à 70 %.
